# EUROPÄISCHE PATENTSCHRIFT

(11) **EP 4 431 405 B1**
(45) Veröffentlichungstag und Bekanntmachung des Hinweises auf die Patenterteilung: **24.12.2025**
(21) Anmeldenummer: 23161460.3
(22) Anmeldetag: 13.03.2023
(51) Int. Cl.: B64G 1/64

(54) **VERRIEGELUNGSVORRICHTUNG ZUM VERRIEGELN UND FREIGEBEN EINER ERSTEN KOMPONENTE RELATIV ZU EINER ZWEITEN KOMPONENTE**
LOCKING DEVICE FOR LOCKING AND RELEASING A FIRST COMPONENT RELATIVE TO A SECOND COMPONENT
DISPOSITIF DE VERROUILLAGE POUR VERROUILLER ET LIBÉRER UN PREMIER COMPOSANT PAR RAPPORT À UN SECOND COMPOSANT

(43) Veröffentlichungstag der Anmeldung: 18.09.2024
(73) Patentinhaber: Airbus Defence and Space GmbH, 82024 Taufkirchen (DE)
(72) Erfinder: SELL, Alexander, 82024 Taufkirchen (DE); HASSELMANN, Nils Frederik, 82024 Taufkirchen (DE); ZIEGLER, Tobias, 82024 Taufkirchen (DE)
(74) Vertreter: LKGLOBAL Lorenz & Kopf Patentanwalt Attorney at Law PartG mbB

(56) Entgegenhaltungen:
- CN-A- 107 628 278
- US-A1- 2017 096 240
- US-A1- 2018 223 947

## Beschreibung

### Technisches Gebiet

Die vorliegende Beschreibung betrifft allgemein einen Mechanismus zum Sperren und Freigeben einer mechanischen Verbindung zwischen zwei Komponenten. Insbesondere betrifft die Beschreibung eine Verriegelungsvorrichtung zum Verriegeln und Freigeben einer ersten Komponente relativ zu einer zweiten Komponente. Beispielsweise kann eine solche Verriegelungsvorrichtung als Startsicherung in einem Satelliten oder sonstigen Raumfahrzeug verwendet werden, ohne jedoch die Verriegelungsvorrichtung auf diesen Verwendungszweck zu beschränken.

### Technischer Hintergrund

In bestimmten Anwendungsfällen müssen zwei Komponenten relativ zueinander mechanisch fixiert und bei Eintreten einer bestimmten Bedingung freigegeben werden. Die zwei Komponenten sind in einem ersten Zustand (welcher auch als gesperrter Zustand bezeichnet werden kann) relativ zueinander fixiert und nicht beweglich, solange eine dieser beiden Komponenten einer Kraft ausgesetzt wird, welche einen Schwellwert nicht übersteigt. In einem zweiten Zustand (welcher auch als freigegebenen Zustand bezeichnet werden kann) können die Komponenten relativ zueinander bewegt werden.

Für einen solchen Zweck kann eine Verriegelungsvorrichtung verwendet werden, welche grundsätzlich beide Zustände einnehmen kann und aus einem Zustand in den anderen Zustand überführt werden kann. Es ist angestrebt, dass die zwei Komponenten in dem gesperrten Zustand mit einer möglichst hohen Haltekraft gegeneinander fixiert werden. Nachdem die Verriegelungsvorrichtung in den freigegebenen Zustand versetzt wurde, soll es möglich sein, die zwei Komponenten relativ zueinander mit möglichst vielen Freiheitsgraden zu bewegen.

Solche Verriegelungsvorrichtungen können beispielsweise und ohne Einschränkung im Kontext von Satelliten als Startsicherung verwendet werden, um Komponenten in dem Satelliten während der Startphase, wenn hohe Kräfte auf den Satelliten wirken und starke Vibrationen auftreten, sicher zu halten, um Beschädigungen an diesen Komponenten oder in dem Satelliten durch sich bewegende Komponenten zu vermeiden.

Eine Verriegelungsvorrichtung für einen solchen Verwendungszweck ist beispielsweise beschrieben in dem Dokument WO 03/059741 A1.

CN 107 628 278 A beschreibt einen Verbindungsmechanismus, um Lasten an einem Satelliten zu befestigen. Der Verbindungsmechanismus besteht aus zwei miteinander verbindbaren Platten. An einer ersten Platte ist ein Stift angeordnet, an dem eine Last befestigt werden kann. Die erste Platte wird mit einer zweite Platte verbunden, indem mehrere Stifte in eine entsprechende Öffnung in der zweiten Platte geschoben werden und dann die erste Platte mit der zweiten Platte miteinander verschraubt werden.

US 2017/096240 A1 beschreibt einen Nutzlastbefestigungsring. Mehrere Satelliten können für den Transport in den Weltraum an dem Nutzlastbefestigungsring befestigt werden. Hierfür werden Adapterplatten und Koppler verwendet, um den Satelliten an einer Anschlussschnittstelle des Nutzlastbefestigungsrings zu befestigen.

### Beschreibung

Es kann als Aufgabe betrachtet werden, eine Verriegelungsvorrichtung bereitzustellen, welche sich durch ein möglichst geringes Eigengewicht, einen möglichst geringen erforderlichen Bauraum und eine niedrige Komplexität auszeichnet und dennoch eine hohe Haltekraft bereitstellt und in dem freigegebenen Zustand eine relative Bewegung der vormals relativ zueinander gesicherten Komponenten mit möglichst vielen Freiheitsgraden zulässt.

Diese Aufgabe wird gelöst durch den Gegenstand des unabhängigen Anspruchs. Weitere Ausführungsformen ergeben sich aus den abhängigen Ansprüchen sowie aus der folgenden Beschreibung.

Gemäß einem Aspekt ist eine Verriegelungsvorrichtung zum Verriegeln und Freigeben einer ersten Komponente relativ zu einer zweiten Komponente angegeben. Die Verriegelungsvorrichtung weist ein erstes Bauteil, ein zweites Bauteil, eine erste Halteplatte und eine zweite Halteplatte auf. Das erste Bauteil ist mit der ersten Komponente koppelbar. Das zweite Bauteil ist mit der zweiten Komponente koppelbar. Das erste Bauteil und das zweite Bauteil sind zwischen der ersten Halteplatte und der zweiten Halteplatte angeordnet. Das erste Bauteil ist von dem zweiten Bauteil durch einen Spalt beabstandet. Die Verriegelungsvorrichtung kann einen gesperrten Zustand und einen freigegebenen Zustand einnehmen und ist ausgestaltet, aus dem gesperrten Zustand in den freigegebenen Zustand überführt zu werden. Das erste Bauteil ist in dem gesperrten Zustand mit Bezug zu dem zweiten Bauteil unbeweglich fixiert. Das erste Bauteil ist in dem freigegebenen Zustand mit Bezug zu dem zweiten Bauteil in einem vorgegebenen Bereich frei bewegbar. Die erste Halteplatte liegt in dem gesperrten Zustand sowohl an dem ersten Bauteil als auch an dem zweiten Bauteil mindestens abschnittsweise unmittelbar an, und die zweite Halteplatte liegt in dem gesperrten Zustand sowohl an dem ersten Bauteil als auch an dem zweiten Bauteil mindestens abschnittsweise unmittelbar an, so dass sich dadurch eine auf die erste Halteplatte und auf die zweite Halteplatte wirkende Kraft auf mindestens zwei nebeneinander verlaufende Lastpfade verteilt. Wenn die Verriegelungsvorrichtung aus dem gesperrten Zustand in den freigegebenen Zustand versetzt wird, bewegen sich die erste Halteplatte und die zweite Halteplatte voneinander weg. In dem freigegebenen Zustand ist die erste Halteplatte sowohl von dem ersten Bauteil als auch dem zweiten Bauteil beabstandet. Ebenso ist in dem freigegebenen Zustand die zweite Halteplatte sowohl von dem ersten Bauteil als auch dem zweiten Bauteil beabstandet.

Die Verriegelungsvorrichtung kann einen gesperrten Zustand und einen freigegebenen oder gelösten Zustand einnehmen. In dem gesperrten Zustand ist das erste Bauteil mit Bezug zu dem zweiten Bauteil fixiert und kann nicht bewegt werden, wenn eine auf die erste Komponente und/oder zweite Komponente einwirkende Kraft unterhalb eines Schwellwertes liegt. In dem freigegeben Zustand ist eine Relativbewegung zwischen dem ersten Bauteil und dem zweiten Bauteil möglich. Als Relativbewegung ist im Zusammenhang mit diesem Dokument zu verstehen, dass entweder das erste Bauteil, oder das zweite Bauteil, oder das erste und das zweite Bauteil bewegt wird.

Die hier beschriebene Verriegelungsvorrichtung ist beispielsweise für die einmalige Verwendung konzipiert. Die Verriegelungsvorrichtung hält während einer bestimmten Zeit zwei Komponenten starr zueinander und wird bei Eintritt einer vorab festgelegten Bedingung in den freigegebenen Zustand versetzt. Sobald die Verriegelungsvorrichtung in dem freigegebenen Zustand ist, verbleibt sie für eine längere Zeit so. Es ist nicht zwingend vorgesehen, dass die Verriegelungsvorrichtung erneut in den gesperrten Zustand versetzt wird, wobei das aber auch nicht ausgeschlossen ist.

Das erste Bauteil und das zweite Bauteil sind zwischen der ersten Halteplatte und der zweiten Halteplatte angeordnet. Damit üben die beiden Halteplatten in dem gesperrten Zustand eine Kraft auf das erste und zweite Bauteil aus. Wenn die Verriegelungsvorrichtung aus dem gesperrten Zustand in den freigegebenen Zustand versetzt wird, bewegen sich die beiden Halteplatten voneinander weg und beide Halteplatten sind beabstandet von dem ersten Bauteil und dem zweiten Bauteil. Die erste Halteplatte ist
gegenüberliegend zu der zweiten Halteplatte angeordnet. In anderen Worten befindet sich das erste Bauteil und das zweite Bauteil sandwich-artig zwischen den beiden Halteplatten.

Das erste Bauteil ist insbesondere sowohl in dem gesperrten Zustand als auch in dem freigegebenen Zustand von dem zweiten Bauteil durch einen Spalt beabstandet. Wenn die Verriegelungsvorrichtung in dem gesperrten Zustand ist, liegt das erste Bauteil nicht unmittelbar an dem zweiten Bauteil an, sondern die erforderliche Kraft, um die Fixierung in dem gesperrten Zustand zu erzielen, wird durch die erste Halteplatte und die zweite Halteplatte aufgebracht.

Dass das erste Bauteil in dem freigegebenen Zustand mit Bezug zu dem zweiten Bauteil frei bewegbar ist, bedeutet, dass das erste Bauteil mit Bezug zu dem zweiten Bauteil entlang dreier Raumachsen translatorisch und um drei Raumachsen rotatorisch bewegt werden kann, und zwar innerhalb des vorgegebenen Bereichs. Damit ermöglicht es die Verriegelungsvorrichtung, dass die erste Komponente relativ zu der zweiten Komponente fixiert werden kann und nach dem Freigeben dieser Fixierung ohne Einschränkung mit sechs Freiheitsgraden bewegt werden kann (innerhalb eines bestimmten vorgegebenen Bereichs).

Die Verriegelungsvorrichtung kann beispielsweise als Verriegelung für eine Nutzlast in einem Raumfahrzeug verwendet werden und wird hauptsächlich während einer Startphase dazu verwendet, die Nutzlast in dem Raumfahrzeug zu fixieren, während die äußeren Kräfte beim Start ihre Wirkung entfalten. Verriegelungsvorrichtungen für diesen Verwendungszweck werden typischerweise als Startsicherung bzw. Launch Lock bezeichnet.

Die Verriegelungsvorrichtung kann aber auch in anderen Gebieten verwendet werden, um ganz allgemein eine erste Komponente lösbar an einer zweiten Komponente zu befestigen und nach dem Freigeben der Befestigung zwischen der ersten Komponente und der zweiten Komponente eine nahezu freie Bewegung der ersten Komponente relativ zu der zweiten Komponente zu ermöglichen.

So kann beispielsweise das erste Bauteil der Verriegelungsvorrichtung mechanisch mit der ersten Komponente gekoppelt sein, beispielsweise mit einem Fahrzeug, mit dem die zweite Komponente verbunden werden soll. Das zweite Bauteil kann seinerseits mit der zweiten Komponente mechanisch verbunden sein. Wenn das erste Bauteil und das zweite Bauteil relativ zueinander verriegelt sind, dann sind demzufolge auch die erste Komponente und die zweite Komponente relativ zueinander fixiert. Insbesondere ist in einer beispielhaften Anwendung die zweite Komponente in einem Raumfahrzeug während einer Startphase starr fixiert. Bei der auf die erste Komponente und/oder zweite Komponente wirkende Kraft kann es sich um Vibrationen und/oder Beschleunigungen während der Startphase eines Raumfahrzeugs handeln.

In dem gesperrten Zustand liegt jeder der beiden Halteplatten unmittelbar an jedem der beiden Bauteile an. Die erste Halteplatte liegt unmittelbar mindestens abschnittsweise sowohl an dem ersten Bauteil als auch an dem zweiten Bauteil an, d.h., dass jeweils ein Teil einer Oberfläche der ersten Halteplatte an einem Teil einer Oberfläche des ersten Bauteils und einem Teil einer Oberfläche des zweiten Bauteils anliegt. Das Gleiche gilt auch für die zweite Halteplatte: die zweite Halteplatte liegt unmittelbar mindestens abschnittsweise sowohl an dem ersten Bauteil als auch an dem zweiten Bauteil an, d.h., dass jeweils ein Teil einer Oberfläche der zweiten Halteplatte an einem Teil einer Oberfläche des ersten Bauteils und einem Teil einer Oberfläche des zweiten Bauteils anliegt.

Die Haltekraft verteilt sich in dem gesperrten Zustand auf mindestens zwei nebeneinander verlaufende Lastpfade. Ein Lastpfad verläuft von der ersten Halteplatte durch das erste Bauteil zu der zweiten Halteplatte und ein weiterer Lastpfad verläuft von der ersten Halteplatte durch das zweite Bauteil zu der zweiten Halteplatte. Somit verteilt sich die Haltekraft vorteilhaft auf die beiden Bauteile und sorgt für eine zuverlässige Fixierung der beiden Komponenten in dem gesperrten Zustand.

Gemäß einer Ausführungsform weist die Verriegelungsvorrichtung weiterhin eine Halteanordnung auf, wobei die Halteanordnung einen Bolzen aufweist, der sich durch die erste Halteplatte und durch die zweite Halteplatte erstreckt, und wobei mindestens die erste Halteplatte und auch das erste Bauteil an dem Bolzen gelagert und ausgestaltet sind, sich entlang des Bolzens zu bewegen, wenn die Verriegelungsvorrichtung aus dem gesperrten Zustand in den freigegebenen Zustand versetzt wird.

Die Halteanordnung ist ausgestaltet, die Bestandteile der Verriegelungsvorrichtung zu halten und in dem gesperrten Zustand eine Kraft auf die Halteplatten auszuüben, die dann wiederum eine Kraft auf das erste Bauteil und das zweite Bauteil ausüben, um diese gegeneinander zu fixieren.

Der Bolzen hat insbesondere eine geradlinige Erstreckung. Beispielsweise hat der Bolzen einen kreisförmigen Querschnitt. In der ersten Halteplatte und in der zweite Halteplatte sind Ausnehmungen angeordnet, durch die sich der Bolzen erstreckt.

Diese Ausnehmungen haben insbesondere eine Querschnittsfläche, die größer ist als die Querschnittsfläche des Bolzens. Halteplatten sowie Bauteile, die für eine Bewegung entlang des Bolzens ausgestaltet sind, sollten zudem eine hinreichende Führungslänge aufweisen, um sich entlang des Bolzens bewegen zu können, ohne zu verkanten, wenn die Verriegelungsvorrichtung aus dem gesperrten Zustand in den freigegebenen Zustand versetzt wird.

Die Verriegelungsvorrichtung kann auch zusätzliche Führungsstifte aufweisen, entlang derer die erste Halteplatte und/oder die zweite Halteplatte geführt bewegt wird, wenn die Verriegelungsvorrichtung aus dem gesperrten Zustand in den freigegebenen Zustand versetzt wird.

Gemäß einer weiteren Ausführungsform weist die Halteanordnung weiterhin einen Eingriff und ein Vorspannelement auf, wobei der Eingriff an dem Bolzen in einer bestimmten Position lösbar befestigt ist und in dieser Position eine Haltekraft auf die erste Halteplatte ausübt, wobei hierdurch auf die erste Halteplatte eine Haltekraft in Richtung des ersten Bauteils und des zweiten Bauteils ausgeübt wird, und wobei das Vorspannelement entlang des Bolzens bewegbar ist, um auf die zweite Halteplatte eine Haltekraft in Richtung des ersten Bauteils und des zweiten Bauteils auszuüben.

**In** anderen Worten drücken der Eingriff und das Vorspannelement jeweils eine Halteplatte in Richtung des ersten Bauteils und des zweiten Bauteils, um die beiden Bauteile relativ zueinander zu fixieren.

Der Eingriff ist beispielsweise formschlüssig mit dem Bolzen in Eingriff gebracht und wird durch eine Sicherung in dieser Position gehalten. Das Vorspannelement ist beispielsweise als Vorspannmutter ausgestaltet, damit ein gewünschtes Anzugsdrehmoment auf die zweite Halteplatte aufgebracht werden kann. Die Vorspannmutter wird beispielsweise entlang eines Gewindes an der Außenfläche des Bolzens gespannt. Der Eingriff übt auf die erste Halteplatte eine Haltekraft in Richtung der Vorspannmutter aus und die Vorspannmutter übt ihrerseits auf die zweite Halteplatte eine Haltekraft in Richtung des Eingriffs aus. Der Eingriff wird üblicherweise an einer bestimmten Position an dem Bolzen angebracht und hält diese Position, wobei auch Eingriffe ohne durchgehenden Bolzen üblich sind und verwendet werden können. Das Vorspannelement hingegen kann an dem Bolzen verschiedene Positionen einnehmen und insbesondere entlang der Längsachse des Bolzens bewegt werden, um ein gewünschtes Anzugsdrehmoment zu erreichen und eine daraus resultierende Haltekraft auf die Halteplatten und das erste und zweite Bauteil auszuüben.

Der Eingriff ist an dem Bolzen zunächst unbeweglich befestigt und wird in dieser Position lösbar gehalten. Hierfür kann beispielsweise eine sogenannte Schmelzsicherung verwendet werden, welche den Eingriff gegen die äußere Oberfläche des Bolzens drückt und den Eingriff somit in der entsprechenden Position hält. Die Schmelzsicherung kann gelöst werden, indem sie beispielsweise mit einem elektrischen Strom beaufschlagt wird, welcher einen Teil des Materials der Schmelzsicherung zum Schmelzen bringt, wodurch die strukturelle Integrität der Schmelzsicherung beschädigt wird und die Verbindung zwischen Eingriff und Bolzen freigegeben wird. Nun kann sich sowohl die erste Halteplatte als auch der Eingriff entlang des Bolzens bewegen und die Verriegelungsvorrichtung befindet sich in dem freigegebenen Zustand.

In dem gesperrten Zustand befinden sich der Eingriff und das Vorspannelement an fixierten Positionen des Bolzens und üben in diesen Positionen jeweils eine Haltekraft auf die jeweils benachbarte Halteplatte aus, um dadurch das erste Bauteil mit Bezug zu dem zweiten Bauteil zu fixieren. Um die Verriegelungsvorrichtung aus dem gesperrten Zustand in den freigegebenen Zustand zu versetzen, wird der Eingriff von dem Bolzen gelöst bzw. die Verbindung zwischen Eingriff und Bolzen wird freigegeben. Dadurch kann sich der Eingriff in Längsrichtung des Bolzens weg von dem Vorspannelement bewegen. Ebenso können sich die beiden Halteplatten von dem ersten Bauteil und dem zweiten Bauteil wegbewegen, um das erste Bauteil mit Bezug zu dem zweiten Bauteil freizugeben.

Gemäß einer weiteren Ausführungsform weist die Verriegelungsvorrichtung weiterhin eine erste Feder und eine zweite Feder auf, wobei die erste Feder zwischen einerseits der ersten Halteplatte und andererseits dem ersten Bauteil und/oder der zweiten Halteplatte angeordnet ist und ausgestaltet ist, die erste Halteplatte von dem ersten Bauteil und dem zweiten Bauteil wegzudrücken, wenn die Verriegelungsvorrichtung aus dem gesperrten Zustand in den freigegebenen Zustand versetzt wird, und wobei die zweite Feder zwischen einerseits der zweiten Halteplatte und andererseits dem ersten Bauteil und/oder der ersten Halteplatte angeordnet ist und ausgestaltet ist, die zweite Halteplatte von dem ersten Bauteil und dem zweiten Bauteil wegzudrücken, wenn die Verriegelungsvorrichtung aus dem gesperrten Zustand in den freigegebenen Zustand versetzt wird.

Vorliegend wird der Ausdruck "Feder" stellvertretend für ein elastisches Element verwendet, welches ausgestaltet ist, die beschriebene Funktion auszuführen und eine Halteplatte von dem ersten Bauteil und/oder dem zweiten Bauteil wegzudrücken.

Es ist auch denkbar, dass die Verriegelungsvorrichtung lediglich eine Feder aufweist, um lediglich eine der beiden Halteplatten von dem ersten Bauteil und dem zweiten Bauteil wegzudrücken.

Die erste Feder und die zweite Feder sind vorliegend als sogenannte Druckfedern ausgestaltet. In dem gesperrten Zustand der Verriegelungsvorrichtung sind die Federn komprimiert zwischen der jeweiligen Halteplatte und dem ersten und zweiten Bauteil. Sobald die Verriegelungsvorrichtung in den freigegebenen Zustand versetzt wird und der Eingriff sowie das Vorspannelement keine Haltekraft mehr auf die Halteplatten ausüben, drücken die beiden Federn die Halteplatten von dem ersten Bauteil und dem zweiten Bauteil weg. Somit liegt weder das erste Bauteil noch das zweite Bauteil an einer der Halteplatten an. Eine relative Bewegung zwischen dem ersten Bauteil und dem zweiten Bauteil ist nun in einem bestimmten Bereich entlang und um alle drei Raumachsen möglich.

Gemäß einer weiteren Ausführungsform weist die zweite und/oder erste Halteplatte eine Ausbauchung auf, die in einer Richtung weg von dem ersten Bauteil und dem zweiten Bauteil weist.

In anderen Worten ist die zweite und/oder erste Halteplatte bezogen auf das erste Bauteil und das zweite Bauteil konvex ausgestaltet. Insbesondere befindet sich die Ausbauchung in einem Bereich des Bolzens, in welchem das Vorspannelement oder der Eingriff die Haltekraft in dem gesperrten Zustand auf die Ausbauchung ausübt. Das Vorspannelement, welches als Vorspannmutter ausgestaltet ist, wird entlang des Bolzens geschraubt und bewegt die zweite Halteplatte und/oder die erste Halteplatte in Richtung des ersten Bauteils und des zweiten Bauteils. Zunächst kommt dann die zweite und/oder erste Halteplatte in Kontakt mit einem der Bauteile. Wird nun die Vorspannmutter weiter angezogen, führt dies zu einer elastischen Verformung der Ausbauchung und die Halteplatte wird auch in dem Bereich der Ausbauchung auf das Bauteil gedrückt, mit dem noch kein Kontakt bestand. Durch die Ausbauchung und die daraus resultierende innere Spannung der Halteplatte in dem gesperrten Zustand wird die Verteilung der von der Vorspannmutter und/oder dem Eingriff auf die Halteplatte ausgeübte Haltekraft auf das erste Bauteil und das zweite Bauteil optimiert. Ebenso werden Fertigungstoleranzen bei dem ersten Bauteil und dem zweiten Bauteil und/oder der beiden Halteplatten kompensiert und dennoch eine gute Verteilung der Haltekraft auf das erste Bauteil und das zweite Bauteil erreicht.

Gemäß einer weiteren Ausführungsform ist die zweite und/oder erste Halteplatte zumindest in dem Bereich der Ausbauchung elastisch verformbar, so dass in der ersten Halteplatte bzw. zweiten Halteplatte eine Vorspannung induziert wird, wenn sich die Verriegelungsvorrichtung in dem gesperrten Zustand befindet.

Beispielsweise übt das Vorspannelement in dem gesperrten Zustand (oder wenn die Verriegelungsvorrichtung in den gesperrten Zustand versetzt wird) eine Kraft auf die Ausbauchung auf und drückt die zweite Halteplatte gegen das erste Bauteil und das zweite Bauteil. Weil die zweite Halteplatte in dem Bereich der Ausbauchung elastisch verformbar ist, verformt sich die zweite Halteplatte in Abhängigkeit der von dem Vorspannelement ausgeübten Kraft und passt sich an die Oberflächenkontur des ersten Bauteils und des zweiten Bauteils an. Das erste Bauteil und das zweite Bauteil sind bevorzugt an der zu der zweiten Halteplatte weisenden Oberfläche eben ausgestaltet. Das bedeutet, dass die zweite Halteplatte in dem freigegebenen Zustand ihre ausgebauchte oder gekrümmte Form einnimmt, wohingegen sie in dem gesperrten Zustand im Wesentlichen eben ist, weil das Vorspannelement die Ausbauchung gegen das erste Bauteil und/oder das zweite Bauteil drückt.

Gemäß einer weiteren Ausführungsform weist die erste Halteplatte oder die zweite Halteplatte ein Formschlusselement auf, welches in dem gesperrten Zustand der Verriegelungsvorrichtung mindestens teilweise in dem Spalt zwischen dem ersten Bauteil und dem zweiten Bauteil positioniert ist.

Das Formschlusselement ist bevorzugt nur an einer der Halteplatten angeordnet, also entweder an der ersten Halteplatte oder an der zweiten Halteplatte, und übt in dem gesperrten Zustand sowohl auf das erste Bauteil als auch auf das zweite Bauteil eine Kraft aus, um das erste Bauteil relativ zu dem zweiten Bauteil zu fixieren.

Gemäß einer weiteren Ausführungsform hat das Formschlusselement eine konische Form und verjüngt sich in einer Richtung zu der zweiten Halteplatte (wenn das Formschlusselement an der ersten Halteplatte angeordnet ist) oder zu der ersten Halteplatte (wenn das Formschlusselement an der zweiten Halteplatte angeordnet ist) hin.

Je fester die erste Halteplatte oder die zweite Halteplatte auf das erste Bauteil und das zweite Bauteil gedrückt wird, desto fester sitzt das Formschlusselement in dem Spalt zwischen dem ersten Bauteil und dem zweiten Bauteil. Die Halteplatten verhindern damit nicht nur eine Bewegung des ersten Bauteils und des zweiten Bauteils entlang des Bolzens, sondern auch eine Bewegung quer zu der Längsrichtung des Bolzens und eine Rotationsbewegung um die Längsrichtung des Bolzens.

Gemäß einer weiteren Ausführungsform erstreckt sich das Formschlusselement in dem gesperrten Zustand entlang der gesamten Länge des Spalts.

Dies vergrößert die Auflagefläche oder Kontaktfläche zwischen dem Formschlusselement und dem ersten Bauteil sowie dem zweiten Bauteil in dem gesperrten Zustand, um eine möglichst große Haltekraft auf das erste Bauteil und das zweite Bauteil aufbringen zu können. Die Länge des Spalts ist hier als die Erstreckung des Spalts in Umfangsrichtung um den Bolzen zu verstehen.

Wenn die Verriegelungsvorrichtung aus dem gesperrten Zustand in den freigegebenen Zustand versetzt wird, so bewegt sich die erste Halteplatte oder die zweite Halteplatte so weit weg von dem ersten Bauteil und dem zweiten Bauteil, dass das Formschlusselement vollständig aus dem Spalt herausbewegt wird.

Gemäß einer weiteren Ausführungsform hat das erste Bauteil eine erste Aufsetzfläche, welche in dem gesperrten Zustand an dem Formschlusselement anliegt, wobei das zweite Bauteil eine zweite Aufsetzfläche hat, welche in dem gesperrten Zustand an dem Formschlusselement anliegt, und wobei sowohl die erste Aufsetzfläche als auch die zweite Aufsetzfläche schräg verlaufen und an eine äußere Form des Formschlusselementes angeglichen sind.

Gemäß einer weiteren Ausführungsform kennzeichnet sich das erste Bauteil und/oder das zweite Bauteil durch eine Asymmetrie entlang des Spalts und in einem Kontaktbereich zu dem Formschlusselement um eine Längsachse des Bolzens.

Indem das erste Bauteil und/oder das zweite Bauteil asymmetrisch sind, wird insbesondere auch einer Drehbewegung des ersten Bauteils und/oder des zweiten Bauteils um die Längsachse des Bolzens entgegengewirkt. Die Asymmetrie ist insbesondere eine Rotations-Asymmetrie in dem Sinne, dass das erste Bauteil und/oder das zweite Bauteil bei einer Drehbewegung um die Längsachse des Bolzens nicht bei jedem beliebigen Drehwinkel auf sich selbst abgebildet werden kann.

Gemäß einer weiteren Ausführungsform ist in dem freigegebenen Zustand das erste Bauteil mit Bezug zu dem zweiten Bauteil entlang dreier zueinander orthogonaler Raumachsen translatorisch und um diese Raumachsen rotatorisch bewegbar.

Das bedeutet, dass durch eine einzelne Freigabeaktion, welche erfolgt, wenn die Verriegelungsvorrichtung aus dem gesperrten Zustand in den freigegebenen Zustand versetzt wird, Bewegungen des ersten Bauteils mit Bezug zu dem zweiten Bauteil mit sechs Freiheitsgraden ermöglicht werden.

Durch die besondere Struktur der Verriegelungsvorrichtung wird in dem gesperrten Zustand eine Haltekraft so ausgeübt, dass das erste Bauteil und das zweite Bauteil in allen Freiheitsgraden relativ zueinander fest fixiert sind, also sowohl eine Bewegung entlang jeder von drei Raumachsen als auch um diese drei Raumachsen, zuverlässig unterbunden wird. Umgekehrt wird, nachdem die Verriegelungsvorrichtung aus dem gesperrten Zustand in den freigegebenen Zustand versetzt worden ist, das erste Bauteil mit Bezug zu dem zweiten Bauteil freigegeben, um in einem gewissen Bereich eine Bewegung mit den genannten sechs Freiheitsgraden ausführen zu können.

Gemäß einer weiteren Ausführungsform ist in dem zweiten Bauteil eine Öffnung vorgesehen, in welcher das erste Bauteil angeordnet ist.

Das erste Bauteil ist hinsichtlich seiner Ausdehnung kleiner als die Öffnung in dem zweiten Bauteil. Somit kann das erste Bauteil so in der Öffnung platziert werden, dass das erste Bauteil umlaufend von dem zweiten Bauteil beabstandet ist. In anderen Worten ergibt sich auf diese Weise der Spalt, der sich zwischen dem ersten Bauteil und dem zweiten Bauteil erstreckt.

Weil das erste Bauteil in dieser Öffnung angeordnet ist, kann sich das erste Bauteil mit Bezug zu dem zweiten Bauteil frei bewegen, nachdem die erste Halteplatte und die zweite Halteplatte sich in dem freigegebenen Zustand von dem ersten Bauteil und dem zweiten Bauteil entfernen.

Die freie Bewegung zwischen dem ersten Bauteil und dem zweiten Bauteil ist typischerweise auf einen bestimmten Bewegungsbereich oder Bewegungsradius begrenzt. Dies stellt jedoch keine Einschränkung für die mit der Verriegelungsvorrichtung fixierten Komponenten dar, weil eine in einem Satelliten angeordnete Komponente, die während des Starts fixiert sein muss und danach freigegeben wird, oftmals auch nur in einem bestimmten Bereich bewegt werden muss.

Gemäß einem weiteren Aspekt ist ein Satellit angegeben. Der Satellit weist ein Gehäuse mit mindestens einer Wand sowie eine Verriegelungsvorrichtung wie hierin beschrieben auf, wobei die Verriegelungsvorrichtung einerseits an der Wand fixiert ist und andererseits mit einer gesicherten Komponente innerhalb des Gehäuses mechanisch gekoppelt ist.

Die Verriegelungsvorrichtung ist hier im Kontext einer spezifischen Anwendung beschrieben und kann als sogenannter Launch Lock verwendet werden, um die gesicherte Komponente in dem Gehäuse des Satelliten während einer Startphase des Satelliten in dem gesperrten Zustand der Verriegelungsvorrichtung gegen ungewollte Bewegungen und Vibrationen zu sichern, damit die gesicherte Komponente selbst keine Schäden erleidet und keine Schäden in dem Gehäuse des Satelliten verursacht. Nach der Startphase oder am Zielort einer Mission wird die Verriegelungsvorrichtung in den freigegebenen Zustand versetzt und die vormals gesicherte Komponente kann nun in einem bestimmten Bereich mit Bezug zu dem Gehäuse des Satelliten frei bewegt werden.

Beispielsweise kann die gesicherte Komponente innerhalb des Gehäuses des Satelliten eine nominell aktuierte Struktur sein, welche an dem Zielort der Mission in bestimmten Grenzen motorisch bewegt werden soll. Um sowohl die Lagerung dieser aktuierten Struktur als auch deren Antrieb vor hohen Belastungen zu schützen, kommt die Verriegelungsvorrichtung zum Einsatz. Nachdem die Verriegelungsvorrichtung aus dem gesperrten Zustand in den freigegebenen Zustand versetzt worden ist, ist die Struktur nicht mehr mit Bezug zu dem Satelliten fixiert und kann gemäß Vorgaben und innerhalb bestimmter Grenzen frei bewegt werden.

### Kurze Beschreibung der Figuren

Nachfolgend werden anhand der beigefügten Zeichnungen einige Details näher beschrieben. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung einer Verriegelungsvorrichtung, welche zwei Komponenten relativ zueinander fixiert.
- Fig. 2: eine schematische Darstellung einer Verriegelungsvorrichtung in einer Explosionsdarstellung.
- Fig. 3: eine schematische Darstellung einer ersten Halteplatte.
- Fig. 4: eine schematische Darstellung eines ersten Bauteils.
- Fig. 5: eine schematische Darstellung eines zweiten Bauteils.
- Fig. 6: eine schematische Darstellung einer zweiten Halteplatte mit einer Ausbauchung.
- Fig. 7: eine schematische Darstellung einer Verriegelungsvorrichtung in einem freigegebenen Zustand.
- Fig. 8: eine schematische Darstellung einer Verriegelungsvorrichtung in einem gesperrten Zustand.
- Fig. 9: eine schematische Darstellung eines Satelliten mit einer Verriegelungsvorrichtung und einer in dem Satelliten fixierten Komponente.

### Detaillierte Beschreibung

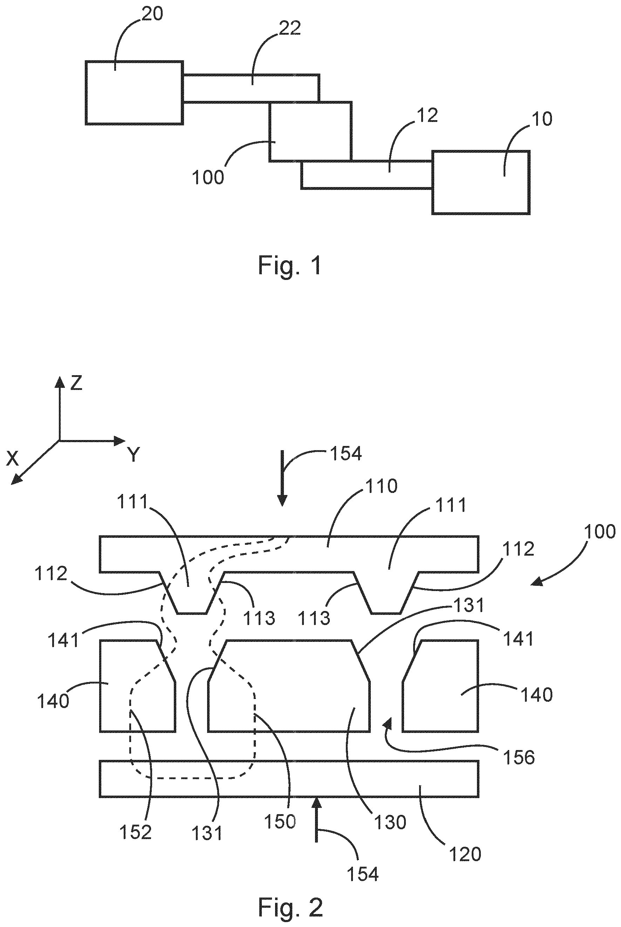

Fig. 1 zeigt eine schematische Darstellung einer Verriegelungsvorrichtung 100, welche ausgestaltet ist, eine erste Komponente 10 relativ zu einer zweiten Komponente 20 zu fixieren und bei Eintreten einer bestimmten Bedingung freizugeben. Die erste Komponente 10 ist mit einem Verbindungselement 12 mit der Verriegelungsvorrichtung 100 verbunden und die zweite Komponente 20 ist mit einem Verbindungselement 22 mit der Verriegelungsvorrichtung 100 verbunden. Die Verbindungselemente 12, 22 sind beispielsweise Stangen oder sonstige starre Elemente, welche eine mechanische Verbindung jeweils zwischen den Komponenten 10, 20 und der Verriegelungsvorrichtung 100 herstellen, und damit die erste Komponente relativ zu der zweiten Komponente fixieren oder freigeben.

Mit Bezug zu Fig. 2 kann das Verbindungselement 12 mit dem ersten Bauteil 130 oder dem zweiten Bauteil 140 verbunden sein, wohingegen das Verbindungselement 22 mit dem anderen dieser zwei Bauteile 130, 140 verbunden ist. Wenn die Verriegelungsvorrichtung 100 in dem gesperrten Zustand ist, sind die Bauteile 130, 140 relativ zueinander unbeweglich und wenn die Verriegelungsvorrichtung 100 in dem freigegebenen Zustand ist, sind die Bauteile 130, 140 relativ zueinander beweglich. Somit ist ersichtlich, dass die erste Komponente 10 relativ zu der zweiten Komponente 20 in Abhängigkeit von dem Zustand der Verriegelungsvorrichtung 100 entweder fixiert oder beweglich ist.

Weiter mit Bezug zu Fig. 2 wird der Aufbau der Verriegelungsvorrichtung 100 beschrieben. Die Verriegelungsvorrichtung 100 besteht im Wesentlichen aus vier Bestandteilen: der ersten Halteplatte 110, der zweiten Halteplatte 120, dem ersten Bauteil 130 und dem zweiten Bauteil 140. Das erste Bauteil 130 und das zweite Bauteil 140 sind wie eine Zwischenlage zwischen der ersten Halteplatte 110 und der zweiten Halteplatte 120 angeordnet.

In dem freigegebenen Zustand kann das erste Bauteil 130 relativ zu dem zweiten Bauteil 140 in einem dreidimensionalen Koordinatensystem mit den zueinander orthogonalen Raumachsen x, y, z in einem bestimmten Bereich beziehungsweise innerhalb vorgegebener Grenzen translatorisch entlang jeder dieser Raumachsen und rotatorisch um jede dieser Raumachsen bewegt werden. Diese Bewegungsfreiheit wird dadurch ermöglicht, dass in dem freigegebenen Zustand, welcher in Fig. 2 gezeigt ist, beide Halteplatten 110, 120 von dem ersten Bauteil 130 und dem zweiten Bauteil 140 beabstandet sind und zwischen dem ersten Bauteil 130 im zweiten Bauteil 140 ein Spalt 156 verläuft.

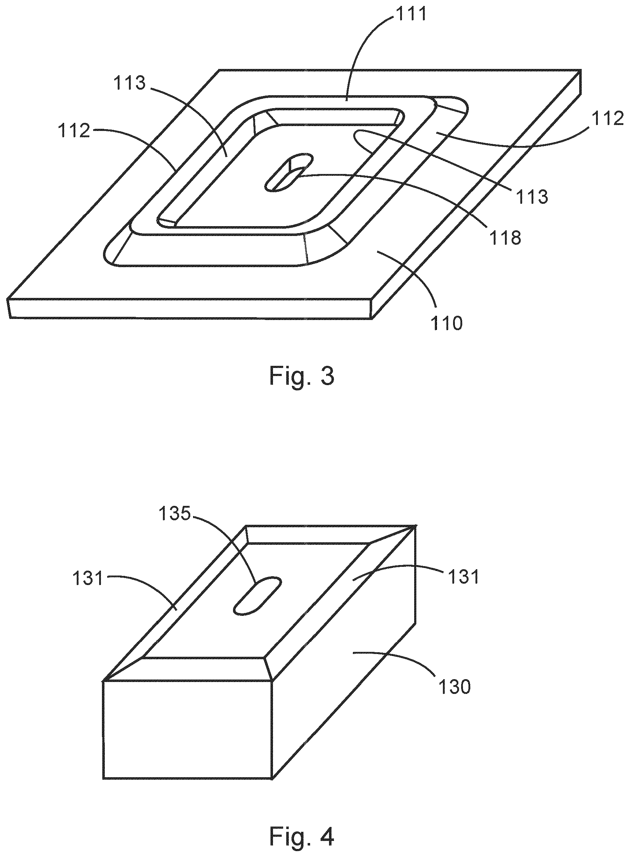

Das erste Bauteil 130 befindet sich in einer Ausnehmung des zweiten Bauteils 140. Beispielsweise umgibt das zweite Bauteil das erste Bauteil vollständig, was in Fig. 2 auf Grund der Schnittdarstellung aber nicht ersichtlich ist. Das erste Bauteil 130 und das zweite Bauteil 140 haben in Richtung der z-Achse eine gleiche oder nahezu gleiche Ausdehnung (Höhe). Zum Spalt 156 hin weisen sowohl das erste Bauteil 130 als auch das zweite Bauteil 140 jeweils eine schräge Aufsetzfläche 131, 141 auf. Die Aufsetzflächen 131, 141 bilden zusammen mit dem Spalt 156 einen trichterförmigen Querschnitt. **In** diese trichterförmige Öffnung wird das Formschlusselement 111 der ersten Halteplatte 110 eingeführt, wenn eine Kraft 154 die erste Halteplatte 110 in Richtung des ersten Bauteils 130 und des zweiten Bauteils 140 bewegt. Die erste Fläche 112 des Formschlusselements 111 kommt auf der Aufsetzfläche 141 zum Liegen und die zweite Fläche 113 des Formschlusselements 111 kommt auf der Aufsetzfläche 131 zum Liegen. Das Formschlusselement 111 trägt dazu bei, wenn es in den Spalt 156 eingeführt ist, eine relative Bewegung des ersten und zweiten Bauteils 130, 140 in der x-y-Ebene zu verhindern (wie der Fig. 3 entnommen werden kann, verläuft das Formschlusselement 111 in der x-y-Ebene umlaufend um das erste Bauteil 130).

Bei der Aufsetzfläche 131 handelt es sich um eine umlaufende Fläche an dem ersten Bauteil 130 und bei der Aufsetzfläche 141 um eine umlaufende Fläche an dem zweiten Bauteil 140.

Die zweite Halteplatte 120 wird in der Darstellung der Fig. 2 von unten gegen das erste Bauteil 130 und das zweite Bauteil 140 gedrückt, über eine Kraft 154. Wie ersichtlich, verteilt sich eine Haltekraft, die auf die beiden Halteplatten 110, 120 jeweils in Richtung des ersten Bauteils 130 und des zweiten Bauteils 140 wirkt, auf zwei Lastpfade 150, 152. Der erste Lastpfad 150 verläuft von der zweiten Halteplatte 120 über das erste Bauteil 130, die Aufsetzfläche 131, und die zweite Fläche 113 in die erste Halteplatte 110. Der zweite Lastpfad 152 verläuft von der zweiten Halteplatte 120 über das zweite Bauteil 140, die Aufsetzfläche 141, und die erste Fläche 112 in die erste Halteplatte 110. Diese beiden Lastpfade 150, 152, die in Fig. 2 im Zusammenhang mit den Aufsetzflächen 131, 141 sowie den Flächen 112, 113 des Formschlusselements 111 gezeigt sind, bilden sich umlaufend entlang der Aufsetzflächen 131, 141.

Fig. 3 zeigt eine isolierte Darstellung der ersten Halteplatte 110 aus einer Perspektive auf die Unterseite der ersten Halteplatte 110, also diejenige Seite, welche dem ersten Bauteil 130 und dem zweiten Bauteil 140 zugewandt ist.

Die erste Halteplatte 110 enthält einen plattenartigen Grundkörper, auf dessen einen Fläche das Formschlusselement 111 als umlaufende Erhöhung (in diesem Fall als Stumpfpyramide) mit einer im Wesentlichen rechteckigen Form mit abgerundeten Ecken angeordnet ist. Die Halteplatte 110 und das Formschlusselement 111 können einstückig ausgestaltet sein.

Durch die erste Halteplatte 110 erstreckt sich eine Öffnung 118, und zwar umgeben von dem Formschlusselement 111. Durch diese Öffnung 118 erstreckt sich ein Bolzen, der die erste Halteplatte hält und führt, wenn das Verriegelungselement in dem gesperrten Zustand ist bzw. in den freigegebenen Zustand versetzt wird.

Die Öffnung 118 kann als normale zylindrische Bohrung ausgestaltet sein. Sie kann aber auch einen anderen Querschnitt haben, und kann beispielsweise ein Langloch sein.

Fig. 4 zeigt eine schematische Darstellung des ersten Bauteils 130 mit der abgeschrägten Aufsetzfläche 131, auf der das Formschlusselement 111 der ersten Halteplatte 110 aufsetzt, wobei die Aufsetzfläche 131 umlaufend um das erste Bauteil 130 ausgebildet ist.

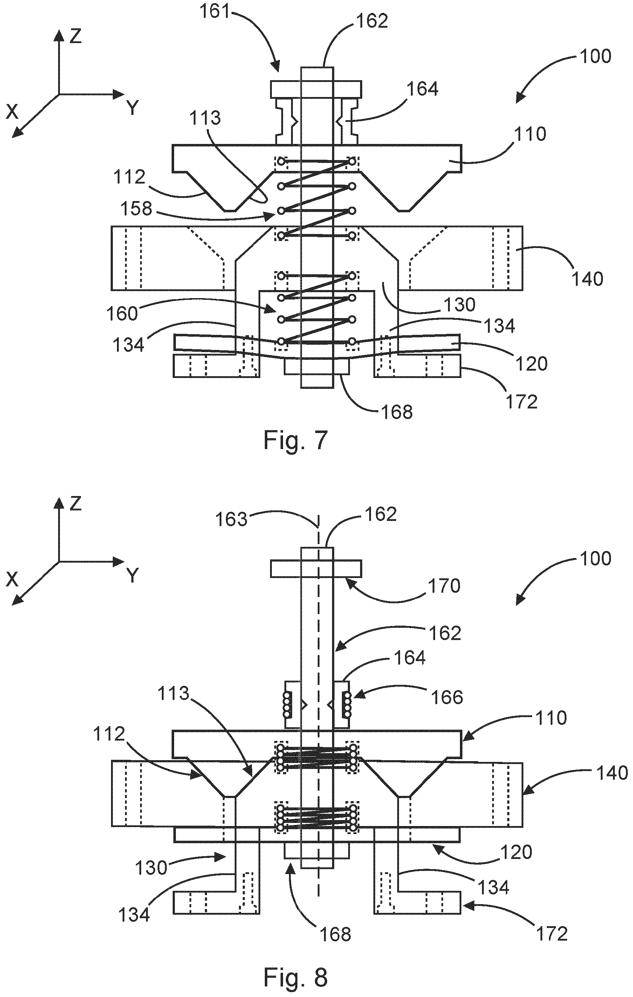

An dem ersten Bauteil wird eine Komponente 10, 20 (siehe Fig. 1) befestigt, wie weiter unten mit Bezug zu Fig. 7 und 8 noch beschrieben wird. Durch das erste Bauteil 130 erstreckt sich eine Öffnung 135.

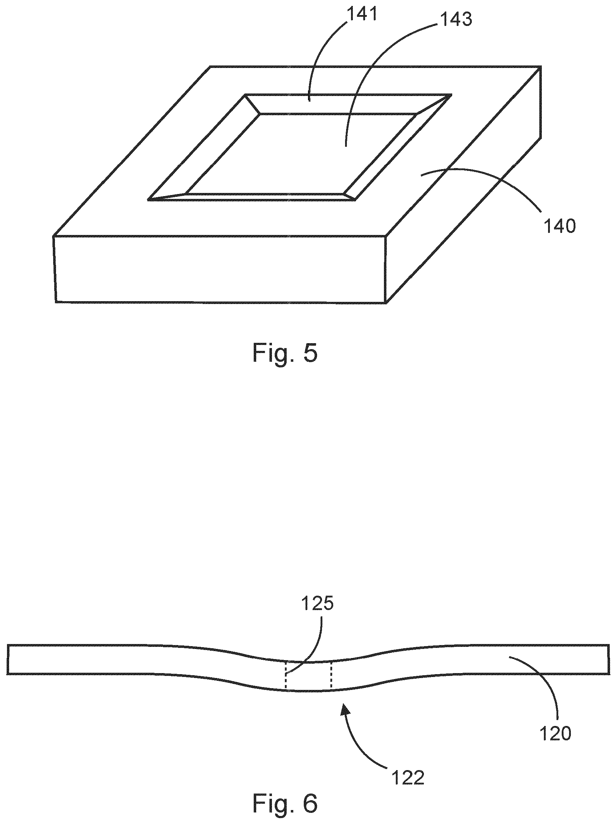

Fig. 5 zeigt eine schematische Darstellung des zweiten Bauteils 140 mit einer zentralen Öffnung 143. Das erste Bauteil 130 ist in dem montierten Zustand in der zentralen Öffnung 143 angeordnet und von dem zweiten Bauteil beabstandet, so dass das erste Bauteil in der zentralen Öffnung 143 innerhalb bestimmter Grenzen frei bewegt werden kann, also entlang von drei Raumachsen und um diese drei Raumachsen. Zu der zentralen Öffnung 143 hin ist eine Kante des zweiten Bauteils 140 abgeschrägt und bildet die umlaufende Aufsetzfläche 141.

Fig. 6 zeigt eine schematische Darstellung der zweiten Halteplatte 120. Die zweite Halteplatte 120 enthält eine Ausbauchung 122 sowie eine Öffnung 125, welche hier gestrichelt eingezeichnet ist. Durch die Öffnung 125 erstreckt sich ein Bolzen (ähnlich der Öffnung 118 der ersten Halteplatte 110), um die erste Halteplatte 110 und die zweite Halteplatte 120 zueinander zu bewegen und eine entsprechende Haltekraft auszuüben.

Die Haltekraft des Bolzens wirkt zunächst auf die Ausbauchung 122, so dass die Bereiche links und rechts von der Ausbauchung zunächst auf das zweite Bauteil einwirken, wenn die zweite Halteplatte 120 in den gesperrten Zustand bewegt wird. Bei zunehmender Haltekraft verformt sich die zweite Halteplatte 120 im Bereich der Ausbauchung und die Ausbauchung wird auf das erste Bauteil 130 gedrückt. In diesem Zustand ist die zweite Halteplatte 120 vorgespannt. Eine Haltekraft wirkt auch dann zuverlässig auf beide Bauteile 130, 140, wenn sich die Höhe der Bauteile 130, 140 auf Grund von Bauteil-, Fertigungs- und Montagetoleranzen unterscheidet.

Fig. 7 zeigt eine Verriegelungsvorrichtung 100 in einem nicht gesperrten bzw. freigegebenen Zustand. In diesem Zustand lässt sich das erste Bauteil 130 mit Bezug zu dem zweiten Bauteil 140 in gewissen Grenzen bewegen, und zwar entlang jeder der drei Achsen x, y, z, sowie um jede dieser Achsen.

Die Komponenten der Verriegelungsvorrichtung 100 sind um eine Halteanordnung 161 mit einem Bolzen 162 angeordnet. Die Halteanordnung 161 enthält einen länglichen Bolzen 162 mit einer Längsachse 163. Ein Eingriff 164 ist an dem Bolzen in einer vorgegebenen Position verriegelbar und wird in dieser Position von einer Sicherung gehalten (wenn die Verriegelungsvorrichtung in dem gesperrten Zustand ist) und kann aus dieser Position freigegeben werden (um die Verriegelungsvorrichtung in den freigegebenen Zustand zu versetzen). Der Eingriff ist benachbart zu der ersten Halteplatte 110. An dem entgegengesetzten Ende des Bolzens 162 ist ein Vorspannelement 168 angeordnet, beispielsweise in Form einer Mutter. Das Vorspannelement 168 ist benachbart zu der zweiten Halteplatte 120 angeordnet. Der Bolzen 162 erstreckt sich durch die Öffnung 118 der ersten Halteplatte 110 (siehe Fig. 3) und durch die Öffnung 125 der zweiten Halteplatte 120 (siehe Fig. 6). Das erste Bauteil 130 und das zweite Bauteil 140 sind zwischen den Halteplatten 110, 120 angeordnet. Der Bolzen 162 erstreckt sich durch die Öffnung 135 des ersten Bauteils 130 (siehe Fig. 4).

Die Öffnung 135 hat einen Querschnitt, welcher größer ist als der Querschnitt des Bolzens 162, so dass das erste Bauteil 130 sich entlang der Längsrichtung des Bolzens 162 bewegen kann, obwohl der Bolzen 162 sich durch dessen Öffnung 135 erstreckt.

Die Verriegelungsvorrichtung 100 weist eine erste Feder 158 zwischen dem ersten Bauteil 130 und der ersten Halteplatte 110 sowie eine zweite Feder 160 zwischen dem ersten Bauteil 130 und der zweiten Halteplatte 120 auf. Die Federn 158, 160 drücken die Halteplatten 110, 120 von den Bauteilen 130, 140 weg und sorgen beispielsweise dafür, dass das erste Bauteil in einem unbelasteten Zustand mittig zwischen den beiden Halteplatten 110, 120 angeordnet ist, damit das zweite Bauteil 140 nicht an eine der Halteplatten 110, 120 angrenzt. Dies ermöglicht eine freie Bewegung des zweiten Bauteils 140 relativ zum ersten Bauteil 130.

Das erste Bauteil 130 hat ein Hut-ähnliches Profil mit mehreren Schenkeln 134, die sich von dem ersten Bauteil 130 weg und durch die zweite Halteplatte 120 erstrecken. Mit diesen Schenkeln 134 kann das erste Bauteil an einer Auflage 172 befestigt werden, wobei die Auflage 172 ein Montageplatz an einer Fahrzeugwand sein kann. Die Auflage 172 bildet die erste Komponente 10, wie sie in Fig. 1 gezeigt ist. Die zweite Komponente 20 kann an dem zweiten Bauteil 140 befestigt werden.

Um nun die Verriegelungsvorrichtung 100 in den gesperrten Zustand zu versetzen, wird die erste Halteplatte 110 und die zweite Halteplatte 120 gegen den Widerstand der Federn 158, 160 in Richtung des ersten und zweiten Bauteils 130, 140 bewegt, mit einer entsprechenden Kraft 154 (siehe Fig. 2) beaufschlagt, und in dieser Position verriegelt, indem der Eingriff 164 in dieser Position fixiert wird und das Vorspannelement 168 mit einer geforderten Festigkeit gespannt wird.

Der verriegelte Zustand wird in Fig. 8 gezeigt. Das erste Bauteil 130 und das zweite Bauteil 140 sind zwischen den zwei Halteplatten 110, 120 fixiert. In dem gesperrten Zustand ist der Eingriff 164 an einer vorgegebenen Position an dem Bolzen 162 fixiert und wird in dieser Position durch eine Sicherung 166 gehalten. Die Sicherung 166 ist beispielsweise eine Schmelzsicherung, welche elektrisch gelöst werden kann, indem die Schmelzsicherung mit einem Strom beaufschlag wird, welche die Schmelzsicherung zum Schmelzen bringt. Sodann löst sich der Eingriff 164 von dem Bolzen und wird mitsamt der ersten Halteplatte 110 entlang der Längsachse 163 des Bolzens in Richtung des Begrenzers 170 an einem Ende des Bolzens gedrückt. Der Begrenzer 170 sorgt dafür, dass der Eingriff 164 und die erste Halteplatte 110 nicht vollständig von der Verriegelungsvorrichtung 100 abgelöst werden. Falls der Eingriff keinen durchgängigen Bolzen ermöglicht bzw. zulässt, wird die Halteplatte 110 durch an dem ersten Bauteil 130 oder an der zweiten Halteplatte 120 montierte Führungsstifte (nicht eingezeichnet) geführt, und der Begrenzer 170 an diesen Führungsstiften angebracht. Während der Eingriff 164 und die erste Halteplatte 110 durch die erste Feder 158 in Richtung des Begrenzers gedrückt werden, drückt die zweite Feder 160 die zweite Halteplatte 120 weg vom ersten Bauteil 130.

Wie in Fig. 7 zu erkennen ist, ist die zweite Halteplatte 120 in Richtung des Vorspannelements 168 gekrümmt bzw. hat die Ausbauchung an der Stelle, wo die zweite Halteplatte 120 an dem Vorspannelement 168 anliegt. Wenn die Verriegelungsvorrichtung 100 aus dem gesperrten Zustand in den freigegebenen Zustand versetzt wird, dann nimmt die zweite Halteplatte 120 wieder ihre ursprüngliche Form mit der Ausbauchung an. In dem gesperrten Zustand der Fig. 8 liegt die zweite Halteplatte 120 an dem ersten Bauteil 130 und dem zweiten Bauteil 140 an.

Wenn die Verriegelungsvorrichtung aus dem gesperrten Zustand in den freigegebenen Zustand versetzt wird, verändert das Vorspannelement 168 seine Position an dem Bolzen 162 üblicherweise nicht. Vielmehr wird lediglich die Fixierung des Eingriffs 164 an dem Bolzen gelöst und die zweite Halteplatte 120 bewegt sich weg von der ersten Halteplatte 110, dem ersten Bauteil 130 und dem zweiten Bauteil 140. Umgekehrt, wenn die Verriegelungsvorrichtung gesperrt wird, wird zunächst der Eingriff 164 in eine gewünschte Position gebracht und das Vorspannelement 168 (beispielsweise eine Spannmutter) wird weiter angezogen, um eine gewünschte Haltekraft auf das erste und zweite Bauteil aufzubringen.

Mit Bezug zu Fig. 7 und 8 soll nun ein beispielhafter Anwendungsfall der Verriegelungsvorrichtung beschrieben werden.

Die Verriegelungsvorrichtung 100 nutzt einen Arretierungsbolzen 162 (mit elektronischer Auslösung des Eingriffs 164 über die Sicherung 166) sowie Passungen zur Kraftübertragung auf die Halteplatten 110, 120. Vorliegend wird ein Formschlusselement 111 als Passung mit gegengleicher Auslöserichtung verwendet und ist ausgestaltet, mechanische Lasten sequentiell zu übertragen. Auf diese Art blockieren sich nach dem Lösen die beiden gegeneinander zu arretierenden Bauteile 130, 140 nicht mehr zwangsweise in mindestens der entgegengesetzten Auslöserichtung (wie bei den einfachen Formschlüssen). Vorliegend wird angestrebt, die Verriegelungsvorrichtung 100 mit einer einzelnen Halteanordnung 161 in dem gesperrten Zustand zu halten, was aus Zuverlässigkeitsgründen vorteilhaft ist. Obwohl nur eine Halteanordnung verwendet wird, soll aber trotz Fertigungstoleranzen ein gleichzeitiger Kraftschluss beider Passungen über das Formschlusselement 111 gewährleistet sein. Die Idee hierbei ist, die durch den Haltebolzen 162 aufgebrachte Vorspannung (üblicherweise einige 10 kN) über ein entsprechend steifes Federelement gleichmäßig auf beide Passungen (Flächen 112 bzw. 113) zu verteilen. Dies wird erreicht, indem die Vorspannung des Haltebolzens auf die Ausbuchtung 122 der zweiten Halteplatte 120 aufgebracht wird, und die Vorspannung diese Ausbuchtung durch elastische Verformung der zweiten Halteplatte an das erste Bauteil 130 und das zweite Bauteil 140 drückt.

Die Lastübertragung zwischen der Auflage 172 und dem zweiten Bauteil 140 erfolgt über zwei Passungen, nämlich die Flächen 112, 113 des Formschlusselementes 111 sowie die erste Halteplatte 110. Die Vorspannung eines einzelnen Bolzens 162 wird über die zweite Halteplatte 120, die als federndes Element ausgestaltet ist, auf beide Passungen in einem gewünschten Verhältnis verteilt. Sowohl die erste Halteplatte 110 als auch die zweite Halteplatte 120 werden in dem geöffneten Zustand zurückgefahren, wodurch alle Freiheitsgrade für eine Bewegung zwischen dem ersten Bauteil 130 und dem zweiten Bauteil 140 freigegeben werden. Die Vorspannung wird über eine Vorspannmutter 168 aufgebracht und die Verriegelungsvorrichtung 100 wird über eine Schmelzsicherung 166 in den freigegebenen Zustand versetzt. Der Bolzen 162 verbleibt im freigegebenen Zustand im System und kann - je nach Ausführung des Eingriffs 164 - gleichzeitig als definierter Anschlag für die beiden Halteplatten 110, 120 dienen. Alternativ kann als Anschlag für die zweite Halteplatte 120 auch die Auflage 172 dienen, und/oder der Begrenzer 170 für die erste Halteplatte 110 kann an gesonderten Führungsstiften angebracht sein.

Da sich beide Passungen 112, 113 in die gleiche Bewegungsrichtung lösen, wird die Vorspannkraft über die zweite Halteplatte 120 wieder in den Bolzen 162 eingeleitet. Diese zweite Halteplatte 120 übernimmt gleichzeitig die Funktion der gleichmäßigen Verteilung der Vorspannung, d.h. im gesperrten Zustand ist die zweite Halteplatte 120 (wie in Fig. 8 angedeutet) elastisch deformiert und somit vorgespannt. Nach dem Lösen des Bolzens 162 (z.B. über eine gängige Schmelzdrahtsicherung 166) können beide Halteplatte 110, 120 über Federkraft mit einem oder mehreren Federelementen 158, 160 entlang der Längsachse 163 des Bolzens 162 von den beiden arretierten Bauteilen 130, 140 entfernt werden. Dies ist in Fig. 7 skizziert. Sollte die Auslösevorrichtung keinen durchgehenden Bolzen 162 erlauben, kann die obere Halteplatte 110 auch entlang zusätzlicher Führungsstifte bewegt werden (nicht eingezeichnet). Je nach Geometrie der beiden Passungen 112, 113 sind ggf. leicht unterschiedliche Vorspannkräfte erforderlich, um mindestens eine vorgegebene Maximallast aufnehmen zu können (in allen Freiheitsgraden). Die Bedingung hierbei ist, dass die gesamte Last in Vorspannrichtung die Vorspannung nicht übersteigen darf, damit es zu keiner Bewegung in der jeweiligen Passung kommen kann. Um die erforderliche Kraftverteilung zu erreichen, können die Steifigkeit der unteren Halteplatte 120 sowie die Vorspannung im Bolzen 162 entsprechend gewählt werden. Im Vergleich zu einer einfachen Passung sind die erforderlichen Vorspannkräfte im Bolzen 162 entsprechend höher (typischerweise um einen Faktor ~2). Die untere Halteplatte 120 ist in der arretierten Konfiguration typischerweise nur elastisch deformiert. Je nach Vorspannkraft ist hierzu auch eine modifizierte Geometrie der Halteplatte möglich, z.B. kann sie aus zwei übereinandergelegten Scheiben aufgebaut sein, die innen sowie außen verbunden sind, aber in der Mitte einen Spalt aufweisen.

Die zweite Halteplatte 120 kann kreisförmig sein und innere und äußere kraftübertragende Kontaktflächen zu dem ersten und zweiten Bauteil 130, 140 aufweisen. Da sich die zweite Halteplatte 120 sowie das erste Bauteil 130 überschneiden, sind entsprechende Aussparungen in der zweiten Halteplatte 120 und dem ersten Bauteil 130 vorgesehen. Hier ist eine ungerade Anzahl von Aussparungen zu bevorzugen, um Spiegelsymmetrien zu verhindern und somit die mechanische Stabilität zu maximieren. Zwischen den inneren und äußeren Kontaktflächen befindet sich der flexible Bereich. Das Material in dem flexiblen Bereich kann dünner sein als in den Kontaktflächen, je nach benötigter Vorspannkraft. Die Kontaktflächen können als flächige Kontakte oder als Linienkontakte oder als Punktkontakte ausgestaltet sein, solange das System zusammen mit der ersten Halteplatte hierdurch nicht mechanisch überbestimmt wird. Solange entweder die äußere oder die innere Kontaktfläche lateral verschiebbar und drehbar bleibt, besteht diese Gefahr nicht. Für eine wohldefinierte Geometrie kann z.B. der innere Kontakt als Konus ausgeführt sein, und der äußere Kontakt als flächiger Kontakt oder über einen balligen Kontakt zwischen einer Fläche und einer ringförmigen Erhebung erfolgen. Die Geometrie bzw. Symmetrie der eigentlichen Passungen bestimmt, wie viele Freiheitsgrade der Mechanismus sicher arretieren kann. Werden einfache konische Passungen eingesetzt, sind alle drei Verschiebungen entlang der Achsen x, y, z geometrisch blockiert, eine Drehung um den Bolzen 162 jedoch nur über Haftreibung. Die anderen beiden Drehungen können ebenfalls - abhängig vom Konuswinkel - nur vergleichsweise kleine Drehmomente übertragen. Durch zusätzliche Strukturierung in radialer Richtung können die Passungen jedoch hohe Drehmomente in diesen Freiheitsgraden übertragen, und durch zusätzliche Strukturierung in tangentialer Richtung können auch hohe Drehmomente um die Bolzenachse übertragen werden. Somit ist die Verriegelungsvorrichtung je nach Ausgestaltung der Passungen für eine Fixierung von drei bis sechs Freiheitsgraden nutzbar.

Dies ist ein wichtiger Vorteil, weil sich auf diese Art Kaltverschweissung zwischen dem ersten Bauteil 130 und der ersten Halteplatte 110 oder dem zweiten Bauteil 140 und der ersten Halteplatte 110 durch vibratorische Bewegungen reduzieren lässt (da die Bewegung gar nicht erst stattfindet). Beruht dagegen - wie es Stand der Technik ist - die Zurückziehbarkeit der Verriegelungsvorrichtung beim Versetzen in den freigegebenen Zustand auf einer gleitenden Bewegung entlang einer Passfläche, ist es prinzipiell nicht ohne Weiteres möglich, die entsprechende vibratorische Bewegung geometrisch zu unterdrücken (sondern es muss z.B. auf Haftreibung oder geeignete Oberflächenbehandlung zurückgegriffen werden). Das Zurückfahren der ersten und zweiten Halteplatte 110, 120 erfolgt mittels geeigneter Federelemente 158, 160 (entweder eine einzelne Feder oder eine pro Halteplatte). Hierbei ist zu beachten, dass die untere Feder 160 eine höhere Federkraft als die obere Feder 158 aufbringen kann, um die Halteplatten an ihre wohldefinierten Anschläge zu bewegen. Die untere Halteplatte 120 wird durch einen Anschlag am ersten Bauteil 130 aufgefangen, und die obere Halteplatte 110 durch einen Anschlag 170 auf dem Bolzen 162 oder auf einem oder mehreren Führungsstiften. Im Vergleich zur Vorspannung des Bolzens 162 ist die (in entgegengesetzter Richtung wirkende) Vorspannung der Federn vernachlässigbar.

Die zweite Halteplatte 120 sowie der Bolzen 162 leiten beim Lösen impulsiv Kräfte (sog. Schocklasten) in das zweite Bauteil 140 ein, da sich hier die vorgespannte zweite Halteplatte 120 abstützt. Wird die erste Halteplatte 110 - analog zur zweiten Halteplatte 120 - ebenfalls vorgespannt, können die eingeleiteten Kräfte balanciert und minimiert werden. In einer vorteilhaften Ausgestaltung ist die in den vorgespannten Halteplatten 110, 120 gespeicherte potentielle Energie nicht wesentlich größer als die im Bolzen 162 gespeicherte potentielle Energie, d.h. die Deformationen sind klein und die Steifigkeiten groß. Somit wird dieser potentielle Nachteil gegenüber dem Stand der Technik begrenzt.

Das Abbremsen der Bewegung beider Halteplatten 110, 120 wenn die Verriegelungsvorrichtung 100 in den freigegebenen Zustand versetzt wird, kann auch zu impulsiven Kräften auf die Auflage 172 führen. Durch geeignete dissipative Elemente (d.h. Dämpfer am Anschlag) können diese Kräfte über eine größere Zeit verteilt eingeleitet werden, wodurch sie entsprechend kleiner werden.

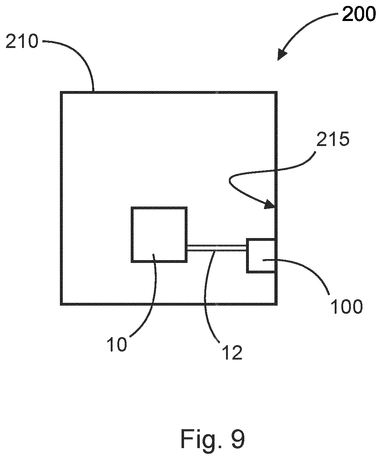

Fig. 9 zeigt einen Satelliten 200 mit einem Gehäuse 210 und einer Wand 215. Die Verriegelungsvorrichtung 100 ist an der Wand 215 befestigt, indem beispielsweise das erste Bauteil 130 wie in Fig. 7 und 8 gezeigt an der Wand festgeschraubt ist. Eine erste Komponente 10, welche während der Startphase des Satelliten starr fixiert sein muss, ist über ein Verbindungselement 12 mit dem zweiten Bauteil verbunden. Die erste Komponente 10 ist beispielsweise ein Teleskop, welches während einer Mission bewegt werden muss, in der Startphase allerdings starr gehalten werden muss, um den für die Bewegung vorgesehenen Mechanismus nicht zu beschädigen.

Dieser in Fig. 9 gezeigte beispielhafte Anwendungsfall für die Verriegelungsvorrichtung 100 ist jedoch nicht als einschränkend zu verstehen. Vielmehr kann die Verriegelungsvorrichtung auch in anderen Anwendungsfällen zum Einsatz kommen, bei denen eine Komponente mit Bezug zu einer anderen Komponente bei Eintritt einer bestimmten Bedingung freigegeben werden kann, um eine Relativbewegung zwischen den zwei Komponenten zu ermöglichen.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 10: erste Komponente
- 12: Verbindungselement
- 20: zweite Komponente
- 22: Verbindungselement
- 100: Verriegelungsvorrichtung
- 110: erste Halteplatte
- 111: Formschlusselement
- 112: erste Fläche
- 113: zweite Fläche
- 118: Öffnung
- 120: zweite Halteplatte
- 122: Ausbauchung
- 125: Öffnung
- 130: erstes Bauteil
- 131: Aufsetzfläche
- 134: Schenkel
- 135: Öffnung
- 140: zweites Bauteil
- 141: Aufsetzfläche
- 143: zentrale Öffnung
- 150: erster Lastpfad
- 152: zweiter Lastpfad
- 154: Kraft
- 156: Spalt (umlaufend um das erste Bauteil 130)
- 158: erste Feder
- 160: zweite Feder
- 161: Halteanordnung
- 162: Bolzen
- 163: Längsachse
- 164: Eingriff
- 166: Sicherung
- 168: Vorspannelement
- 170: Anschlag, Begrenzer
- 172: Auflage
- 200: Satellit
- 210: Gehäuse
- 215: Wand

## Patentansprüche

1. Verriegelungsvorrichtung (100) zum Verriegeln und Freigeben einer ersten Komponente (10) relativ zu einer zweiten Komponente (20), die Verriegelungsvorrichtung (100) aufweisend:
ein erstes Bauteil (130), welches mit der ersten Komponente (10) koppelbar ist;
ein zweites Bauteil (140), welches mit der zweiten Komponente (20) koppelbar ist;
eine erste Halteplatte (110) und eine zweite Halteplatte (120);
wobei das erste Bauteil (130) und das zweite Bauteil (140) zwischen der ersten Halteplatte (110) und der zweiten Halteplatte (120) angeordnet sind;
wobei das erste Bauteil (130) von dem zweiten Bauteil (140) durch einen Spalt (156) beabstandet ist;
wobei die Verriegelungsvorrichtung (100) einen gesperrten Zustand und einen freigegebenen Zustand einnehmen kann und ausgestaltet ist, aus dem gesperrten Zustand in den freigegebenen Zustand überführt zu werden;
wobei das erste Bauteil (130) in dem gesperrten Zustand mit Bezug zu dem zweiten Bauteil (140) unbeweglich fixiert ist;
wobei das erste Bauteil (130) in dem freigegebenen Zustand mit Bezug zu dem zweiten Bauteil (140) in einem vorgegebenen Bereich frei bewegbar ist;
wobei die erste Halteplatte (110) in dem gesperrten Zustand sowohl an dem ersten Bauteil (130) als auch an dem zweiten Bauteil (140) mindestens abschnittsweise unmittelbar anliegt, und die zweite Halteplatte (120) in dem gesperrten Zustand sowohl an dem ersten Bauteil (130) als auch an dem zweiten Bauteil (140) mindestens abschnittsweise unmittelbar anliegt, und dadurch eine auf die erste Halteplatte und die zweite Halteplatte wirkende Kraft (154) sich auf mindestens zwei nebeneinander verlaufende Lastpfade (150, 152) verteilt;
wobei die Verriegelungsvorrichtung (100) ausgestaltet ist, wenn sie aus dem gesperrten Zustand in den freigegebenen Zustand versetzt wird, dass sich die erste Halteplatte (110) und die zweite Halteplatte (120) voneinander wegbewegen;
und **dadurch gekennzeichnet, dass** in dem freigegebenen Zustand die erste Halteplatte (110) von dem ersten Bauteil (130) und dem zweiten Bauteil (140) beabstandet ist und die zweite Halteplatte (120) von dem ersten Bauteil (130) und dem zweiten Bauteil (140) beabstandet ist.

2. Verriegelungsvorrichtung (100) nach Anspruch 1,
weiterhin aufweisend eine Halteanordnung (161);
wobei die Halteanordnung (161) einen Bolzen (162) aufweist, der sich durch die erste Halteplatte (110) und durch die zweite Halteplatte (120) erstreckt;
wobei sowohl die erste Halteplatte (110) als auch das erste Bauteil (130) an dem Bolzen (162) gelagert und ausgestaltet sind, sich entlang des Bolzens (162) zu bewegen, wenn die Verriegelungsvorrichtung (100) aus dem gesperrten Zustand in den freigegebenen Zustand versetzt wird.

3. Verriegelungsvorrichtung (100) nach Anspruch 2,
wobei die Halteanordnung (161) weiterhin einen Eingriff (164) und ein Vorspannelement (168) aufweist;
wobei der Eingriff (164) an dem Bolzen (162) in einer bestimmten Position lösbar befestigt ist und in dieser Position eine Haltekraft auf die erste Halteplatte (110) ausübt, wobei hierdurch auf die erste Halteplatte (110) eine Haltekraft in Richtung des ersten Bauteils (130) und des zweiten Bauteils (140) ausgeübt wird;
wobei das Vorspannelement (168) entlang des Bolzens (162) bewegbar ist, um auf die zweite Halteplatte (120) eine Haltekraft in Richtung des ersten Bauteils (130) und des zweiten Bauteils (140) auszuüben.

4. Verriegelungsvorrichtung (100) nach einem der Ansprüche 2 oder 3,
weiterhin aufweisend eine erste Feder (158) und eine zweite Feder (160);
wobei die erste Feder (158) zwischen einerseits der ersten Halteplatte (110) und andererseits dem ersten Bauteil (130) und/oder der zweiten Halteplatte (120) angeordnet ist und ausgestaltet ist, die erste Halteplatte (110) von dem ersten Bauteil (130) und dem zweiten Bauteil (140) wegzudrücken, wenn die Verriegelungsvorrichtung aus dem gesperrten Zustand in den freigegebenen Zustand versetzt wird,
wobei die zweite Feder (158) zwischen einerseits der zweiten Halteplatte (120) und andererseits dem ersten Bauteil (130) und/oder der ersten Halteplatte (110) angeordnet ist und ausgestaltet ist, die zweite Halteplatte (120) von dem ersten Bauteil (130) und dem zweiten Bauteil (140) wegzudrücken, wenn die Verriegelungsvorrichtung aus dem gesperrten Zustand in den freigegebenen Zustand versetzt wird.

5. Verriegelungsvorrichtung (100) nach einem der voranstehenden Ansprüche,
wobei die erste Halteplatte (110) und/oder die zweite Halteplatte (120) eine Ausbauchung (122) aufweist, die in einer Richtung weg von dem ersten Bauteil (130) und dem zweiten Bauteil (140) weist.

6. Verriegelungsvorrichtung (100) nach Anspruch 5,
wobei die erste Halteplatte (110) und/oder die zweite Halteplatte (120) zumindest in dem Bereich der Ausbauchung (122) elastisch verformbar ist, so dass in der ersten Halteplatte (110) bzw. in der zweiten Halteplatte (120) eine Vorspannung induziert wird, wenn sich die Verriegelungsvorrichtung (100) in dem gesperrten Zustand befindet.

7. Verriegelungsvorrichtung (100) nach einem der voranstehenden Ansprüche,
wobei die erste Halteplatte (110) oder die zweite Halteplatte (120) ein Formschlusselement (111) aufweist, welches in dem gesperrten Zustand der Verriegelungsvorrichtung (100) mindestens teilweise in dem Spalt (156) zwischen dem ersten Bauteil (130) und dem zweiten Bauteil (140) positioniert ist.

8. Verriegelungsvorrichtung (100) nach Anspruch 7,
wobei das Formschlusselement (111) eine konische Form hat und sich in einer Richtung zu der ersten Halteplatte (110) bzw. zu der zweiten Halteplatte (120) verjüngt.

9. Verriegelungsvorrichtung (100) nach Anspruch 7 oder 8,
wobei sich das Formschlusselement (111) in dem gesperrten Zustand entlang der gesamten Länge des Spalts (156) erstreckt.

10. Verriegelungsvorrichtung (100) nach einem der Ansprüche 7 bis 9,
wobei das erste Bauteil (130) eine erste Aufsetzfläche (131) hat, welche in dem gesperrten Zustand an dem Formschlusselement (111) anliegt;
wobei das zweite Bauteil (140) eine zweite Aufsetzfläche (141) hat, welche in dem gesperrten Zustand an dem Formschlusselement (111) anliegt;
wobei sowohl die erste Aufsetzfläche (131) als auch die zweite Aufsetzfläche (141) schräg verlaufen und an eine äußere Form des Formschlusselementes (111) angeglichen sind.

11. Verriegelungsvorrichtung (100) nach einem der Ansprüche 7 bis 10,
wobei sich das erste Bauteil (130) und/oder das zweite Bauteil (140) entlang des Spalts (156) und in einem Kontaktbereich zu dem Formschlusselement (111) um eine Längsachse (163) des Bolzens (162) durch eine Asymmetrie kennzeichnen.

12. Verriegelungsvorrichtung (100) nach einem der voranstehenden Ansprüche,
wobei in dem freigegebenen Zustand das erste Bauteil (130) mit Bezug zu dem zweiten Bauteil (140) entlang dreier zueinander orthogonaler Raumachsen (x, y, z) translatorisch und um diese Raumachsen (x, y, z) rotatorisch bewegbar ist.

13. Verriegelungsvorrichtung (100) nach einem der voranstehenden Ansprüche,
wobei in dem zweiten Bauteil (140) eine Öffnung (143) vorgesehen ist, in welcher das erste Bauteil (130) angeordnet ist.

14. Satellit (200), aufweisend:
ein Gehäuse (210) mit mindestens einer Wand (215);
eine Verriegelungsvorrichtung (100) nach einem der voranstehenden Ansprüche;
wobei die Verriegelungsvorrichtung (100) einerseits an der Wand (215) fixiert ist und andererseits mit einer gesicherten Komponente (10) innerhalb des Gehäuses (210) mechanisch gekoppelt ist.

## Claims

1. A locking device (100) for locking and releasing a first component (10) relative to a second component (20), the locking device (100) comprising:
a first component (130) which can be coupled to the first component (10);
a second component (140) which can be coupled to the second component (20);
a first retaining plate (110) and a second retaining plate (120);
wherein the first component (130) and the second component (140) are arranged between the first retaining plate (110) and the second retaining plate (120);
wherein the first component (130) is spaced apart from the second component (140) by a gap (156);
wherein the locking device (100) can be a locked state and a released state and is designed to be transferred from the locked state into the released state;
wherein the first component (130) is immovably fixed in the locked state with respect to the second component (140);
wherein the first component (130) is freely movable in the released state with respect to the second component (140) in a predetermined range;
wherein the first retaining plate (110) in the locked state bears directly against both the first component (130) and the second component (140) at least in sections, and the second retaining plate (120) in the locked state bears directly against both the first component (130) and the second component (140) at least in sections, and as a result a force (154) acting on the first retaining plate and the second retaining plate is distributed over at least two load paths (150, 152) running next to one another;
wherein the locking device (100) is designed, when it is transferred from the locked state into the released state, such that the first retaining plate (110) and the second retaining plate (120) move away from one another;
and **characterized in that**, in the released state, the first retaining plate (110) is spaced apart from the first component (130) and the second component (140) and the second retaining plate (120) is spaced apart from the first component (130) and the second component (140).

2. The locking device (100) according to claim 1,
further comprising a retaining arrangement (161);
wherein the retaining arrangement (161) comprises a bolt (162) which extends through the first retaining plate (110) and through the second retaining plate (120);
wherein both the first retaining plate (110) and the first component (130) are mounted on the bolt (162) and are designed to move along the bolt (162) when the locking device (100) is transferred from the locked state into the released state.

3. The locking device (100) according to claim 2,
wherein the retaining arrangement (161) further comprises an engagement (164) and a biasing element (168);
wherein the engagement (164) is releasably fixed to the bolt (162) in a certain position and in this position exerts a retaining force on the first retaining plate (110), whereby a retaining force is exerted on the first retaining plate (110) in the direction of the first component (130) and the second component (140);
wherein the biasing element (168) is movable along the bolt (162) in order to exert a retaining force on the second retaining plate (120) in the direction of the first component (130) and the second component (140).

4. The locking device (100) according to any one of claims 2 or 3,
further comprising a first spring (158) and a second spring (160);
wherein the first spring (158) is arranged between the first retaining plate (110) on the one hand and the first component (130) and/or the second retaining plate (120) on the other hand, and is designed to push the first retaining plate (110) away from the first component (130) and the second component (140) when the locking device is transferred from the locked state into the released state;
wherein the second spring (158) is arranged between, on the one hand, the second retaining plate (120) and, on the other hand, the first component (130) and/or the first retaining plate (110) and is designed to push the second retaining plate (120) away from the first component (130) and the second component (140) when the locking device is transferred from the locked state into the released state.

5. The locking device (100) according to any one of the preceding claims,
wherein the first retaining plate (110) and/or the second retaining plate (120) comprises a bulge (122) which faces in a direction away from the first component (130) and the second component (140).

6. The locking device (100) according to claim 5,
wherein the first retaining plate (110) and/or the second retaining plate (120) is elastically deformable at least in the region of the bulge (122), such that a preload is induced in the first retaining plate (110) and in the second retaining plate (120), respectively, when the locking device (100) is in the locked state.

7. The locking device (100) according to any one of the preceding claims,
wherein the first retaining plate (110) or the second retaining plate (120) comprises a form-fitting element (111) which, in the locked state of the locking device (100), is positioned at least partially in the gap (156) between the first component (130) and the second component (140).

8. The locking device (100) according to claim 7,
wherein the form-fitting element (111) has a conical shape and tapers in a direction towards the first retaining plate (110) and towards the second retaining plate (120), respectively.

9. The locking device (100) according to claim 7 or 8,
wherein the form-fitting element (111) extends in the locked state along the entire length of the gap (156).

10. The locking device (100) according to any one of claims 7 to 9,
wherein the first component (130) has a first contact surface (131) which bears against the form-fitting element (111) in the locked state;
wherein the second component (140) has a second contact surface (141) which bears against the form-fitting element (111) in the locked state;
wherein both the first contact surface (131) and the second contact surface (141) run obliquely and are matched to an outer shape of the form-fitting element (111).

11. The locking device (100) according to any one of claims 7 to 10,
wherein the first component (130) and/or the second component (140) are **characterized by** an asymmetry along the gap (156) and in a contact region with the form-fitting element (111) about a longitudinal axis (163) of the bolt (162).

12. The locking device (100) according to any one of the preceding claims,
wherein in the released state the first component (130) is translationally movable with respect to the second component (140) along three mutually orthogonal spatial axes (x, y, z) and is rotationally movable about these spatial axes (x, y, z).

13. The locking device (100) according to any one of the preceding claims,
wherein an opening (143) is provided in the second component (140), in which the first component (130) is arranged.

14. A satellite (200), comprising:
a housing (210) with at least one wall (215);
a locking device (100) according to one of the preceding claims;
wherein the locking device (100) is fixed, on the one hand, to the wall (215) and, on the other hand, is mechanically coupled to a secured component (10) within the housing (210).

## Revendications

1. Dispositif de verrouillage (100) pour verrouiller et libérer un premier élément (10) par rapport à un deuxième élément (20), le dispositif de verrouillage (100) comprenant:
un premier composant (130) qui peut être couplé au premier élément (10);
un deuxième composant (140) qui peut être couplé au deuxième élément (20);
une première plaque de retenue (110) et une deuxième plaque de retenue (120);
dans lequel le premier composant (130) et le deuxième composant (140) sont disposés entre la première plaque de retenue (110) et la deuxième plaque de retenue (120);
dans lequel le premier composant (130) est espacé du deuxième composant (140) par une fente (156);
dans lequel le dispositif de verrouillage (100) peut adopter un état verrouillé et un état libéré et est configuré pour être transféré de l'état verrouillé à l'état libéré;
dans lequel le premier composant (130) est fixé de manière immobile par rapport au deuxième composant (140) dans l'état verrouillé;
dans lequel le premier composant (130) est librement mobile dans une plage prédéterminée par rapport au deuxième composant (140) dans l'état libéré;
dans lequel la première plaque de retenue (110), dans l'état verrouillé, s'applique directement au moins en partie à la fois contre le premier composant (130) et contre le deuxième composant (140), et la deuxième plaque de retenue (120), dans l'état verrouillé, s'applique directement au moins en partie à la fois contre le premier composant (130) et contre le deuxième composant (140), et ainsi une force (154) agissant sur la première plaque de retenue et la deuxième plaque de retenue se répartit sur au moins deux chemins de charge (150, 152) s'étendant l'un à côté de l'autre;
dans lequel le dispositif de verrouillage (100) est configuré, lorsqu'il est transféré de l'état verrouillé à l'état libéré, de telle sorte que la première plaque de retenue (110) et la deuxième plaque de retenue (120) s'éloignent l'une de l'autre;
et **caractérisé en ce que**, dans l'état libéré, la première plaque de retenue (110) est espacée du premier composant (130) et du deuxième composant (140) et la deuxième plaque de retenue (120) est espacée du premier composant (130) et du deuxième composant (140).

2. Dispositif de verrouillage (100) selon la revendication 1,
comprenant en outre un agencement de retenue (161);
dans lequel l'agencement de retenue (161) comprend un boulon (162) s'étendant à travers la première plaque de retenue (110) et à travers la deuxième plaque de retenue (120);
dans lequel à la fois la première plaque de retenue (110) et le premier composant (130) sont montés sur le boulon (162) et sont configurés pour se déplacer le long du boulon (162) lorsque le dispositif de verrouillage (100) est transféré de l'état verrouillé à l'état libéré.

3. Dispositif de verrouillage (100) selon la revendication 2,
dans lequel l'agencement de retenue (161) comprend en outre une prise (164) et un élément de sollicitation (168);
dans lequel la prise (164) est fixée de manière amovible au boulon (162) dans une position spécifiée et, dans cette position, exerce une force de retenue sur la première plaque de retenue (110), exerçant ainsi une force de retenue sur la première plaque de retenue (110) vers le premier composant (130) et le deuxième composant (140);
dans lequel l'élément de sollicitation (168) est mobile le long du boulon (162) pour exercer une force de retenue sur la deuxième plaque de retenue (120) vers le premier composant (130) et le deuxième composant (140).

4. Dispositif de verrouillage (100) selon l'une quelconque des revendications 2 ou 3,
comprenant en outre un premier ressort (158) et un deuxième ressort (160);
dans lequel le premier ressort (158) est disposé entre d'une part la première plaque de retenue (110) et d'autre part le premier composant (130) et/ou la deuxième plaque de retenue (120) et est configuré pour pousser la première plaque de retenue (110) à l'écart du premier composant (130) et du deuxième composant (140) lorsque le dispositif de verrouillage est transféré de l'état verrouillé à l'état libéré;
dans lequel le deuxième ressort (158) est disposé entre d'une part la deuxième plaque de retenue (120) et d'autre part le premier composant (130) et/ou la première plaque de retenue (110) et est configuré pour pousser la deuxième plaque de retenue (120) à l'écart du premier composant (130) et du deuxième composant (140) lorsque le dispositif de verrouillage est transféré de l'état verrouillé à l'état libéré.

5. Dispositif de verrouillage (100) selon l'une quelconque des revendications précédentes,
dans lequel la première plaque de retenue (110) et/ou la deuxième plaque de retenue (120) comprend un renflement (122) orienté dans une direction à l'écart du premier composant (130) et du deuxième composant (140).

6. Dispositif de verrouillage (100) selon la revendication 5,
dans lequel la première plaque de retenue (110) et/ou la deuxième plaque de retenue (120) est élastiquement déformable au moins dans la région du renflement (122) de telle sorte qu'une précontrainte est induite dans la première plaque de retenue (110) ou dans la deuxième plaque de retenue (120), respectivement, lorsque le dispositif de verrouillage (100) est dans l'état verrouillé.

7. Dispositif de verrouillage (100) selon l'une quelconque des revendications précédentes,
dans lequel la première plaque de retenue (110) ou la deuxième plaque de retenue (120) comprend un élément de complémentarité de forme (111) qui, dans l'état verrouillé du dispositif de verrouillage (100), est positionné au moins en partie dans la fente (156) entre le premier composant (130) et le deuxième composant (140).

8. Dispositif de verrouillage (100) selon la revendication 7,
dans lequel l'élément de complémentarité de forme (111) a une forme conique et se rétrécit dans une direction vers la première plaque de retenue (110) ou vers la deuxième plaque de retenue (120), respectivement.

9. Dispositif de verrouillage (100) selon la revendication 7 ou 8,
dans lequel l'élément de complémentarité de forme (111) s'étend le long de toute la longueur de la fente (156) dans l'état verrouillé.

10. Dispositif de verrouillage (100) selon l'une quelconque des revendications 7 à 9,
dans lequel le premier composant (130) a une première surface de pose (131) qui, dans l'état verrouillé, s'applique contre l'élément de complémentarité de forme (111);
dans lequel le deuxième composant (140) a une deuxième surface de pose (141) qui, dans l'état verrouillé, s'applique contre l'élément de complémentarité de forme (111);
dans lequel à la fois la première surface de pose (131) et la deuxième surface de pose (141) s'étendent obliquement et sont adaptées à une forme extérieure de l'élément de complémentarité de forme (111).

11. Dispositif de verrouillage (100) selon l'une quelconque des revendications 7 à 10,
dans lequel le premier composant (130) et/ou le deuxième composant (140) se caractérisent par une asymétrie le long de la fente (156) et dans une zone de contact avec l'élément de complémentarité de forme (111) autour d'un axe longitudinal (163) du boulon (162).

12. Dispositif de verrouillage (100) selon l'une quelconque des revendications précédentes,
dans lequel le premier composant (130) est mobile en translation par rapport au deuxième composant (140) le long de trois axes spatiaux (x, y, z) orthogonaux entre eux et en rotation autour de ces axes spatiaux (x, y, z) dans l'état libéré.

13. Dispositif de verrouillage (100) selon l'une quelconque des revendications précédentes,
dans lequel une ouverture (143) est prévue dans le deuxième composant (140), dans laquelle le premier composant (130) est disposé.

14. Satellite (200), comprenant:
un boîtier (210) avec au moins une paroi (215);
un dispositif de verrouillage (100) selon l'une quelconque des revendications précédentes;
dans lequel le dispositif de verrouillage (100) est fixé d'une part à la paroi (215) et est couplé mécaniquement d'autre part à un élément sécurisé (10) à l'intérieur du boîtier (210).
